# EUROPÄISCHE PATENTSCHRIFT

(11) **EP 1 325 321 B1**
(45) Veröffentlichungstag und Bekanntmachung des Hinweises auf die Patenterteilung: **20.10.2010**
(21) Anmeldenummer: 01962986.4
(22) Anmeldetag: 30.08.2001
(51) Int. Cl.: G01N 30/60

(54) **CHROMATOGRAPHIESÄULE**
CHROMATOGRAPHY COLUMN
COLONNE DE CHROMATOGRAPHIE

(30) Priorität: 12.10.2000 DE 10050402
(43) Veröffentlichungstag der Anmeldung: 09.07.2003
(73) Patentinhaber: Merck Patent GmbH, 64293 Darmstadt (DE)
(72) Erfinder: SÄTTLER, Günther, 64354 Reinheim (DE); POHL, Hans-Dieter, 64319 Pfungstadt (DE)
(86) Internationale Anmeldenummer: PCT/EP2001/010010
(87) Internationale Veröffentlichungsnummer: WO 2002/031490

(56) Entgegenhaltungen:
- EP-A- 0 156 520
- US-A- 5 227 059
- US-A- 5 342 515

## Beschreibung

Die Erfindung betrifft eine Chromatographiesäule für die HochdruckFlüssigkeitschromatographie, die aufgrund ihrer Konstruktion mit unterschiedlichen Anschlußsystemen wie einer Kartuschenhalterung oder einer Reduzierverschraubung versehen werden kann.

Zum Anschluß von HPLC-Säulen sind zwei verschiedene Systeme bekannt: Chromatographiesäulen für den direkten Anschluß an Elutionsmittelzu- und ablauf oder Kartuschensysteme mit austauschbaren Säulenkartuschen.

Üblicherweise besitzen Chromatographiesäulen ein Außengewinde, auf das die Anschlüsse (Reduzieranschlüsse) für Elutionsmittelzu- und -ablauf aufgeschraubt werden können. Häufig sind in die Reduzieranschlußverschraubung zudem Dicht- und Filterelemente eingearbeitet.

EP 0156520 offenbart eine Chromatographiesäule mit einem im Säulenrohr verschiebbaren Stopfen. Das Säulenrohr weist ein Außengewinde und eine daneben befindliche Nut auf.

Säulenkartuschen dagegen besitzen keine direkten Verschraubungsmöglichkeiten. Sie werden in Kartuschenhalterungen eingespannt oder, wie in DE 35 19 725 oder G 90 05 896 beschrieben, mit einer abnehmbaren Verschraubung versehen. Vorteil der Säulenkartuschen ist, daß beim Austausch einer verbrauchten Säule nur die Säulenkartusche, nicht aber das reversible Anschluß- oder Einspannsystem nachgekauft werden muß. Der Verbraucher benötigt nach einmaligem Kauf des gesamten Kartuschensystems demnach nur noch die Säulenkartuschen. Ohne das Anschluß- oder Einspannsystem sind Säulenkartuschen jedoch nicht zu verwenden. Verbraucher, die kein Anschluß- oder Einspannsystem besitzen, müssen Chromatographiesäulen mit Außengewinde und Reduzierverschraubung beziehen.

Anbieter von Chromatographiesäulen wiederum müssen für jedes System entsprechende Säulen anbieten. Somit muß ein Anbieter für eine bestimmte Art von Trägermaterial und Säulengröße zumindest zwei Produkte anbieten: eine Säule mit direkter Reduzierverschraubung und eine Kartuschensäule. Dies ist umständlich in der Produktion und Befüllung und erfordert doppelte Lagerhaltung.

Aufgabe der vorliegenden Erfindung war es daher, eine Chromatographiesäule zur Verfügung zu stellen, die einen universellen Einsatz in beiden Anschlußsystemen ermöglicht.

Es wurde gefunden, daß eine universelle Chromatographiesäule zur Verfügung gestellt werden kann, indem eine Kartuschensäule mit Nuten zur Befestigung der Kartuschenverschraubung zusätzlich mit einem Außengewinde versehen wird.

Gegenstand der vorliegenden Erfindung ist daher eine Chromatographiesäule bestehend aus einem mit Sorbens gefüllten Säulenrohr, das an beiden Enden Filter- und Dichtelemente aufweist und das an beiden Enden mit mindestens einer ringförmigen Nut und einem Außengewinde versehen ist, **dadurch gekennzeichnet, dass** die Nut in das Außengewinde eingebracht ist.

Gegenstand der vorliegenden Erfindung ist weiterhin ein Kartuschensystem mit Anschlüssen für Lösungsmittelzu- und -ablauf, das eine erfindungsgemäße Chromatographiesäule als Säulen kartusche enthält.

Gegenstand der vorliegenden Erfindung ist zudem die Verwendung einer erfindungsgemäßen Chromatographiesäule zur chromatographischen Auftrennung mindestens zweier Substanzen.

In den Abbildungen ist eine bevorzugte Ausführungsform der erfindungsgemäßen Chromatographiesäule gezeigt. Da die Säule vorzugsweise symmetrisch aufgebaut ist, ist jeweils nur ein Ende der Säule gezeigt.

Abbildung 1 zeigt einen Schnitt durch ein Säulenende mit angebrachter direkter Verschraubung.

Abbildung 2 zeigt einen Schnitt durch ein Säulenende mit angebrachter Kartuschenverschraubung.

Die erfindungsgemäße Chromatographiesäule entspricht in ihrer Größe, Form, Material und Befüllung den bekannten Chromatographiesäulen. Das Säulenrohr ist typischerweise mit einem Sorbens gefüllt und mit Filter- und Dichtelementen verschlossen. Filter- und Dichtelemente sind dem Fachmann bekannt. Das Säulenrohr besteht bevorzugt aus Metall, z.B. Edelstahl. Auf der Außenseite des Säulenrohrs ist an beiden Enden mindestens eine Nut und ein Außengewinde aufgebracht. Das Außengewinde entspricht dem einer Chromatographiesäule zur direkten Verschraubung. In das Außengewinde ist in das Säulenrohr zusätzlich mindestens eine ringförmige Nut eingebracht. Diese Nut ermöglicht die Integration der Chromatographiesäule in ein Kartuschensystem. Die Integration einer Vorsäule erfolgt je nach Einsatz der Chromatographiesäule wie es für Säulen mit Außengewinde bzw. Kartuschensysteme (z.B. EP 0 268 185) bekannt ist.

In einer bevorzugten Ausführungsform entspricht die Chromatographiesäule einer z.B. von Merck KGaA, Deutschland, zu erwerbenden Edelstahl-Fertigsäule RT mit Außengewinde, in deren Säulenrohr zusätzlich an den Enden innen eine Aussparung zur Aufnahme von Filter- und Dichtelement und außen eine ringförmige Nut eingearbeitet wurde, so daß die Säule in ein Kartuschensystem entsprechend EP 0 268 185 wie z.B. das manu-CART^{®} Kartuschensystem von Merck KGaA eingesetzt werden kann.

Die erfindungsgemäße Chromatographiesäule kann in jedes Kartuschensystem eingesetzt werden, bei dem die Fixierung der Anschlüsse für Lösungsmittelzu- und -ablauf über Halbschalen erfolgt, die in die Nuten an den Enden der Säule eingelegt werden.

Durch die erfindungsgemäße Chromatographiesäule wird für Kunden und Hersteller eine Vereinfachung der Produktpalette erreicht. Die erfindungsgemäße Chromatographiesäule vereint alle Vorteile von Chromatographiesäulen für den direkten Anschluß mit denen von Kartuschensystemen mit austauschbaren Säulenkartuschen. Der Benutzer kann die Chromatographiesäule wahlweise in beiden Systemen einsetzen. Auch ein gemischter Anschluß ist möglich. Der Hersteller kann das Sortiment an Chromatographiesäulen um die Hälfte reduzieren und spart so Logistik- und Lagerkosten.

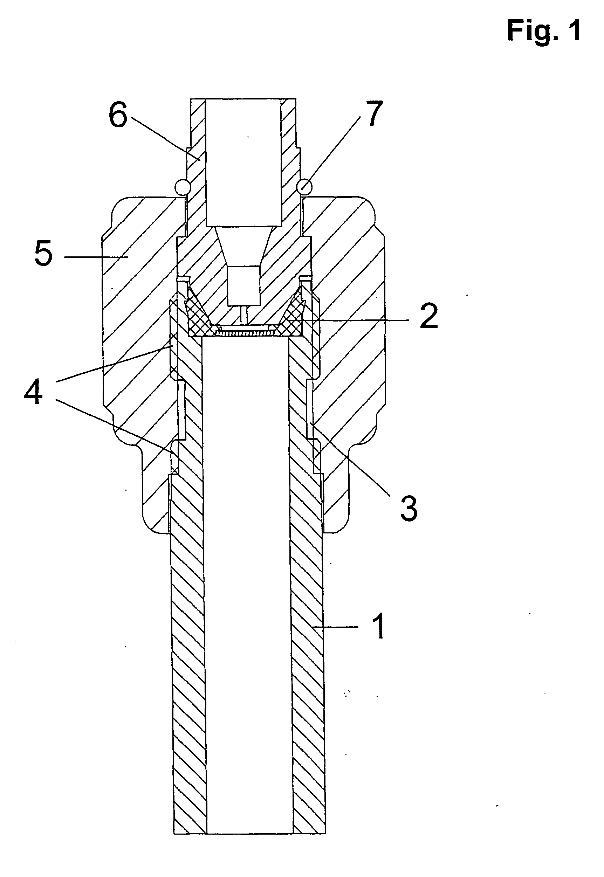

Abbildung 1 zeigt einen Schnitt durch ein Säulenende mit angebrachter direkter Reduzierverschraubung. In das Säulenrohr (1) ist innen am Ende des Rohrs ein Dicht- und Filterelement (2) eingebracht. Auf der Außenseite des Säulenrohrs (1) befindet sich eine ringförmige Nut (3) sowie oberhalb und unterhalb der Nut ein Außengewinde (4). Die Nut (3) wird bei der Verwendung einer direkten Reduzierverschraubung nicht benötigt. Statt dessen ist die Überwurfmutter (5) auf das Außengewinde (4) aufgeschraubt. Durch die Überwurfmutter wird das Druckstück (6) mit Sicherungsring (7) zum Anschluß des Elutionsmittelzu- und ablaufs auf dem Dicht- und Filterelement (2) fixiert.

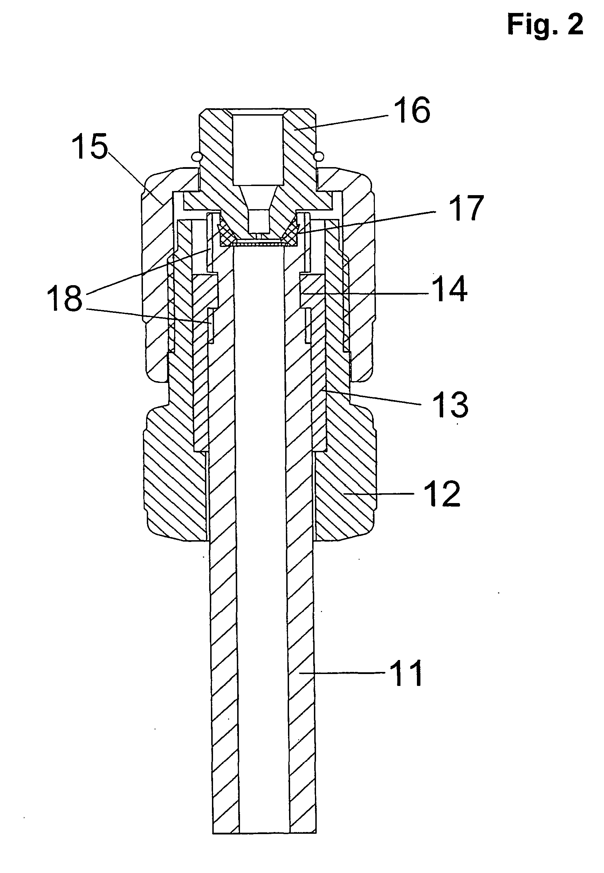

Abbildung 2 zeigt einen Schnitt durch ein Säulenende mit angebrachter Kartuschenverschraubung. In das Säulenrohr (11) ist innen an den Enden ein Dicht- und Filterelement (17) eingebracht. Auf der Außenseite des Säulenrohrs (11) befindet sich eine ringförmige Nut (14) sowie oberhalb und unterhalb der Nut ein Außengewinde (18). Das Außengewinde (18) wird bei der Verwendung einer Kartuschenverschraubung nicht benötigt. Vielmehr sind in diesem Fall zwei Halbschalen (13) an die Nut (14) angelegt, die die Stützmutter (12) in Position halten. Auf die Stützmutter (12) ist eine Überwurfmutter (15) aufgeschraubt, die wiederum das Druckstück (16) zum Anschluß des Elutionsmittelzu- und ablaufs auf dem Dicht- und Filterelement (17) fixiert.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

## Patentansprüche

1. Chromatographiesäule bestehend aus einem mit Sorbens gefüllten Säulenrohr, das an beiden Enden Filter- und Dichtelemente aufweist und das an beiden Enden ein Außengewinde und eine ringförmige Nut aufweist, **dadurch gekennzeichnet, dass** die Nut in das Außengewinde eingebracht ist.

2. Kartuschensystem mit Anschlüssen für Lösungsmittelzu- und ablauf, **dadurch gekennzeichnet dass** es eine Chromatographiesäule entsprechend Anspruch 1 als Säulenkartusche enthält.

3. Verwendung einer Chromatographiesäule entsprechend Anspruch 1 zur chromatographischen Auftrennung mindestens zweier Substanzen.

## Claims

1. Chromatography column consisting of a sorbent-filled column tube which has filter and sealing elements at both ends and which has an external thread and an annular groove at both ends, **characterised in that** the groove is incorporated into the external thread.

2. Cartridge system with connections for solvent feed and discharge, **characterised in that** it comprises a chromatography column corresponding to Claim 1 as column cartridge.

3. Use of a chromatography column corresponding to Claim 1 for the chromatographic separation of at least two substances.

## Revendications

1. Colonne de chromatographie constituée d'un tube de colonne rempli de sorbant qui comprend des éléments de filtre et d'étanchéité aux deux extrémités et qui comprend un filet externe et une gorge annulaire aux deux extrémités, **caractérisée en ce que** la gorge est incorporée dans le filet externe.

2. Système de cartouche avec des connexions pour l'alimentation et la décharge de solvant, **caractérisé en ce qu'**il comprend une colonne de chromatographie correspondant à la revendication 1 en tant que cartouche en colonne.

3. Utilisation d'une colonne de chromatographie correspondant à la revendication 1 pour la séparation chromatographique d'au moins deux substances.
